(19) Europäisches Patentamt
European Patent Office
Office européen des brevets

(11) **EP 4 661 518 A1**

(12) **EUROPEAN PATENT APPLICATION**
published in accordance with Art. 153(4) EPC

(43) Date of publication:
**10.12.2025 Bulletin 2025/50**

(21) Application number: **23919073.9**

(22) Date of filing: **02.02.2023**

(51) International Patent Classification (IPC):
*H04W 52/30* (2009.01)    *H04W 52/50* (2009.01)

(52) Cooperative Patent Classification (CPC):
**H04W 52/30; H04W 52/38; H04W 52/50**

(86) International application number:
**PCT/CN2023/074307**

(87) International publication number:
**WO 2024/159497 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **ZHOU, Rui**
**Beijing 100085 (CN)**

(74) Representative: **Dehns Germany Partnerschaft mbB**
**Theresienstraße 6-8**
**80333 München (DE)**

(54) **METHOD AND APPARATUS FOR DETERMINING TRANSMISSION POWER, METHOD AND APPARATUS FOR SENDING INDICATION INFORMATION, AND MEDIUM**

(57) The present disclosure provides a method and apparatus for determining transmission power, a method and apparatus for sending indication information, and a medium. The method for determining transmission power comprises: determining the maximum transmission power $P_{CMAX}$ of a first channel of a sidelink according to a first power limit value, the first power limit value being a power limit value allowed when a user equipment camps on a serving cell or is located outside a coverage range of the serving cell. In the method of the present disclosure, a user equipment determines $P_{CMAX}$ according to a power limit value allowed when the user equipment camps on or does not camp on a serving cell. In the process of determining $P_{CMAX}$, the power limit values when the user equipment is located within the coverage range and outside the coverage range of a network device can be considered, so that the uplink coverage effect is ensured while reducing the interferences to other devices, thereby obtaining more reasonable $P_{CMAX}$,

User equipment 101

Network device 102

S201, determine a maximum transmission power $P_{CMAX}$ for a first channel of a sidelink according to a first power limit

S202, send the maximum transmission power $P_{CMAX}$

**FIG. 2**

**Description**

**TECHNICAL FIELD**

The present disclosure relates to wireless communication technologies and, in particular, to a method and an apparatus for determining transmission power, a method and an apparatus for sending indication information, and a medium.

**BACKGROUND**

Sidelink (Sidelink, SL) involves Device to Device (Device to Device, D2D) communication and Vehicle to Everything (Vehicle to Everything, V2X) technology. Among them, V2X, also known as Internet of Vehicles technology, is a new generation of information and communication technology that connects a vehicle with various devices.

**SUMMARY**

The present disclosure provides a method and an apparatus for determining transmission power, a method and an apparatus for sending indication information, and a medium.

In a first aspect, the present disclosure provides a method for determining transmission power, performed by a user equipment, where the method includes:

determining, according to a first power limit, a maximum transmission power $P_{CMAX}$ for a first channel of a sidelink; where the first power limit is a permissible power limit when the user equipment camps on a serving cell or is outside a coverage of the serving cell.

In the method of the present disclosure, the user equipment determines $P_{CMAX}$ according to the permissible power limit when the user equipment camps on or does not camp on the serving cell. During the process of determining $P_{CMAX}$, the power limits in both scenarios (i.e., the user equipment being within and outside the coverage of the network device) can be considered, aiming to reduce interference to other devices while ensuring the uplink coverage effect, thereby obtaining a more reasonable $P_{CMAX}$,

In some possible implementations, when the user equipment camps on the serving cell, the first power limit is a maximum permissible power value for the serving cell.

In some possible implementations, the method further includes:
receiving indication information sent by a network device of the serving cell, where the indication information is used to indicate the maximum permissible power value for the serving cell.

In some possible implementations, the determining, according to the first power limit, the maximum transmission power $P_{CMAX}$ for the first channel of the sidelink includes:

determining, according to the first power limit, a lower limit value $P_{CMAX\_L,f,c}$ and an upper limit value $P_{CMAX\_H,f}$, of the maximum transmission power, and determining the $P_{CMAX}$ within an interval $[P_{CMAX\_L,f,c}, P_{CMAX\_H,f}]$; where the $P_{CMAX\_L,f,c}$ satisfies:

$$P_{CMAX\_L,f,c} = MIN \{p\text{-}max, P_{PowerClass,V2X}\text{-}MAX(MAX(MPR_c , A\text{-}MPR_c) + T_{IB,c} , P\text{-}MPR_c), P_{Regulatory,c}\};$$

and
the $P_{CMAX\_H,f}$, satisfies:

$$P_{CMAX\_H,f,c} = MIN \{p\text{-}max, P_{PowerClass, V2X}, P_{Regulatory,c}\};$$

where *p-max* indicates the maximum permissible power value for the serving cell, $P_{PowerClass, V2X}$ indicates a nominal maximum power of the user equipment in a first frequency band, $MPR_c$ indicates a permissible power backoff of the user equipment in the serving cell, $A\text{-}MPR_c$ indicates a permissible additional power backoff of the user equipment in the serving cell, $T_{IB,c}$ indicates a maximum permissible power relaxation of the user equipment in a multi-connectivity scenario supported by the serving cell, $P\text{-}MPR_c$ indicates a maximum power management backoff of the user equipment in the serving cell, and $P_{Regulatory,c}$ indicates a regulatory maximum power value of the user equipment in the serving cell.

In some possible implementations, when the user equipment is outside the coverage of the serving cell, the first power limit is a maximum value among maximum permissible transmission powers for a plurality of sidelink resource pools of the user equipment.

In some possible implementations, when the user equipment is outside the coverage of the serving cell, the first power limit is a minimum value among maximum permissible transmission powers for a plurality of sidelink resource pools of the user equipment.

In some possible implementations, the method further includes:

determining, according to configuration information of the plurality of sidelink resource pools pre-configured for the user equipment, a maximum value or a minimum value among the maximum permissible transmission powers for the plurality of sidelink resource pools.

In some possible implementations, the method further includes:

receiving configuration information of the plurality of sidelink resource pools sent by a network device of the serving cell; and determining a maximum value or a minimum value among the maximum permissible transmission powers for the plurality of SL resource pools.

In some possible implementations, the determining, according to the first power limit, the maximum transmission power $P_{CMAX}$ for the first channel of the sidelink includes:

determining, according to the first power limit, a lower limit value $P_{CMAX\_L,f,c}$ and an upper limit value $P_{CMAX\_H,f}$, of the maximum transmission power, and determining the $P_{CMAX}$ within an interval $[P_{CMAX\_L,f,c}, P_{CMAX\_H,f}]$;

where the $P_{CMAX\_L,f,c}$ satisfies:

$P_{CMAX\_L,f,c} = $ MIN $\{maxTransPower, P_{PowerClass, V2X}$-MAX(MAX($MPR_c$ , $A\text{-}MPR_c$) + $T_{IB,c}$ , $P\text{-}MPR_c$), $P_{Regulatory,c}\}$;

and

the $P_{CMAX\_H,f}$, satisfies:

$$P_{CMAX\_H,f,c} = \text{MIN } \{maxTransPower, \ P_{PowerClass, V2X}, \ P_{Regulatory,c}\};$$

where *maxTransPower* indicates a maximum value or a minimum value among the maximum permissible transmission powers for the plurality of resource pools.

In a second aspect, the present disclosure provides a method for sending indication information, performed by a network device, where the method includes:

sending indication information to a user equipment, where the indication information is used to indicate a first power limit when the user equipment camps on a serving cell, and the first power limit is a maximum permissible power value for the serving cell.

In the method of the present disclosure, the network device sends the indication information to the user equipment to inform the corresponding power limit within the coverage of the serving cell, i.e., the maximum permissible power value for the serving cell. This enables the user equipment to determine a more reasonable $P_{CMAX}$, aiming to reduce interference to other devices while ensuring the uplink coverage effect.

In some possible implementations, the sending the indication information to the user equipment includes:

sending radio resource control (RRC) signaling to the user equipment, where the RRC signaling includes the indication information.

In some possible implementations, the method further includes:

sending configuration information of a plurality of sidelink resource pools to the user equipment.

In a third aspect, the present disclosure provides an apparatus for determining transmission power, which may be configured to perform the steps executed by the user equipment in the aforementioned first aspect or any possible design of the first aspect. The user equipment may implement the functions of the above methods in the form of a hardware structure, software modules, or a combination of a hardware structure and software modules.

When the apparatus shown in the third aspect is implemented by software modules, the apparatus may include a processing module. The processing module may be configured for a communication apparatus to perform processing operations, such as generating information/messages to be sent or processing received signals to obtain information/-messages.

When performing the steps described in the first aspect, the processing module is configured to determine a maximum transmission power $P_{CMAX}$ for a first channel of a sidelink according to a first power limit; where the first power limit is a permissible power limit when the user equipment camps on a serving cell or is outside a coverage of the serving cell.

In a fourth aspect, the present disclosure provides an apparatus for sending indication information, which may be configured to perform the steps executed by the network device in the aforementioned second aspect or any possible design of the second aspect. The network device may implement the functions of the above methods in the form of a hardware structure, software modules, or a combination of a hardware structure and software modules.

When the apparatus shown in the fourth aspect is implemented by software modules, the apparatus may include a transceiver module, where the transceiver module may be configured to support a communication apparatus in performing communication.

When performing the steps described in the second aspect, the transceiver module is configured to send indication information to a user equipment, where the indication information is used to indicate a first power limit value when the user equipment camps on a serving cell, and the first power limit value is a maximum permissible power value for the serving cell.

In a fifth aspect, the present disclosure provides a user equipment, including one or more processors and a memory. The memory is configured to store a computer program, and the one or more processors are configured to execute the computer program to implement the first aspect or any possible design of the first aspect.

In a sixth aspect, the present disclosure provides a network device, including one or more processors and a memory. The memory is configured to store a computer program, and the one or more processors are configured to execute the computer program to implement the second aspect or any possible design of the second aspect.

In a seventh aspect, the present disclosure provides a computer-readable storage medium having instructions (or called a computer program or a program) stored therein, where when the instructions are invoked and executed on a computer, the computer is caused to perform the first aspect or any possible design of the first aspect.

In an eighth aspect, the present disclosure provides a computer-readable storage medium having instructions (or called a computer program or a program) stored therein, where when the instructions are invoked and executed on a computer, the computer is caused to perform the second aspect or any possible design of the second aspect.

It should be understood that the foregoing general description and the following detailed description are merely exemplary and explanatory and are not restrictive of the present disclosure.

## BRIEF DESCRIPTION OF DRAWINGS

The drawings described herein are used to provide a further understanding of the embodiments of the present disclosure and constitute a part of the present disclosure. The schematic embodiments of the present disclosure and the descriptions thereof are used to explain the embodiments of the present disclosure and do not constitute an improper limitation of the embodiments of the present disclosure.

The drawings herein are incorporated into and constitute a part of this specification, illustrate embodiments consistent with the embodiments of the present disclosure, and together with the specification serve to explain the principles of the embodiments of the present disclosure.

FIG. 1 is a schematic diagram of a wireless communication system architecture according to an embodiment of the present disclosure.

FIG. 2 is a flowchart of a method for transmitting maximum transmission power according to an exemplary embodiment.

FIG. 3 is a flowchart of a method for transmitting indication information according to an exemplary embodiment.

FIG. 4 is a flowchart of a method for determining transmission power according to an exemplary embodiment.

FIG. 5 is a flowchart of another method for determining transmission power according to an exemplary embodiment.

FIG. 6 is a flowchart of a method for sending indication information according to an exemplary embodiment.

FIG. 7 is a flowchart of another method for sending indication information according to an exemplary embodiment.

FIG. 8 is a block diagram of an apparatus for sending capability information according to an exemplary embodiment.

FIG. 9 is a block diagram of a user equipment according to an exemplary embodiment.

FIG. 10 is a block diagram of an apparatus for receiving capability information according to an exemplary embodiment.

FIG. 11 is a block diagram of a network device according to an exemplary embodiment.

## DETAILED DESCRIPTION

The embodiments of the present disclosure will be further described with reference to the drawings and specific implementations.

Exemplary embodiments will be described in detail herein, examples of which are illustrated in the accompanying drawings. When the following description refers to the drawings, the same numerals in different drawings refer to the same or similar elements unless otherwise indicated. The implementations described in the following exemplary embodiments do not represent all implementations consistent with the embodiments of the present disclosure. Instead, they are merely examples of apparatuses and methods consistent with some aspects of the present disclosure as detailed in the appended claims.

The terms used in the embodiments of the present disclosure are for the purpose of describing particular embodiments only and are not intended to limit the embodiments of the present disclosure. As used in the embodiments of the present disclosure and the appended claims, the singular forms "a," "an," and "the" are intended to include the plural forms as well, unless the context clearly indicates otherwise. It should also be understood that the term "and/or" as used herein refers to and encompasses any and all possible combinations of one or more of the associated listed items.

It should be understood that although the terms first, second, third, etc. may be used in the embodiments of the present disclosure to describe various information, such information should not be limited by these terms. These terms are only used to distinguish information of the same type from each other. For example, without departing from the scope of the embodiments of the present disclosure, first information may also be referred to as second information, and similarly, second information may also be referred to as first information. Depending on the context, the words "if' and "in case" as used herein may be interpreted as "at the time of" or "when" or "in response to determining."

Embodiments of the present disclosure are described in detail below, examples of which are illustrated in the accompanying drawings, where the same or similar reference numerals refer to the same or similar elements throughout. The embodiments described below with reference to the drawings are exemplary and are intended to explain the present disclosure and should not be construed as limiting the present disclosure.

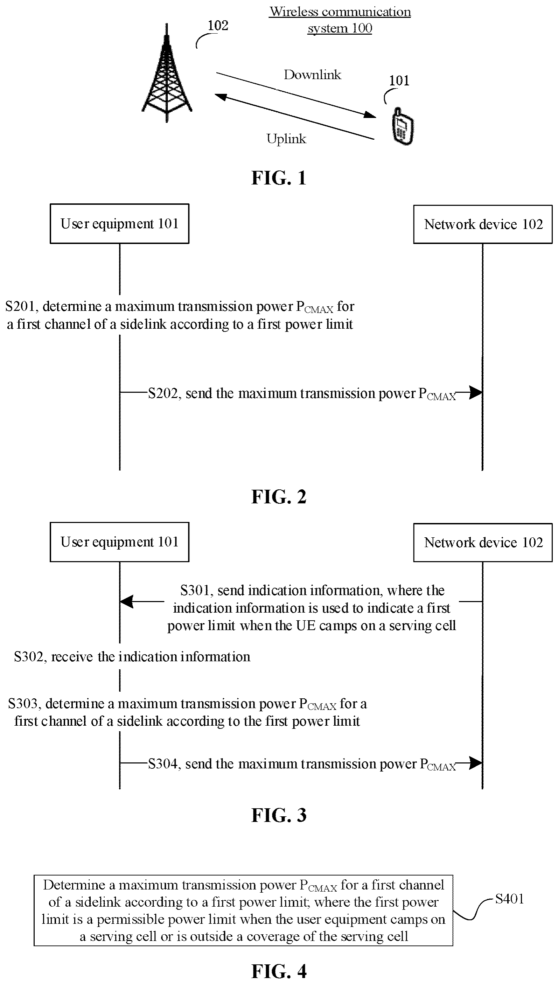

As shown in FIG. 1, a method for determining transmission power and a method for sending indication information provided in embodiments of the present disclosure may be applied to a wireless communication system 100, which may include a user equipment 101 and a network device 102. The user equipment 101 is configured to support carrier aggregation and may be connected to multiple carrier units of the network device 102, including a primary carrier unit and one or more secondary carrier units.

It should be understood that the wireless communication system 100 described above is applicable to both low-frequency and high-frequency scenarios. Application scenarios of the wireless communication system 100 include, but are not limited to, a long term evolution (long term evolution, LTE) system, a LTE frequency division duplex (frequency division duplex, FDD) system, a LTE time division duplex (time division duplex, TDD) system, a worldwide interoperability for micro wave access (worldwide interoperability for micro wave access, WiMAX) communication system, a cloud radio access network (cloud radio access network, CRAN) system, a future 5th-Generation (5th-Generation, 5G) system, a new radio (new radio, NR) communication system, or a future evolved public land mobile network (public land mobile network, PLMN) system.

The user equipment 101 above may be a terminal (terminal), an access terminal, a terminal unit, a terminal station, a mobile station (mobile station, MS), a remote station, a remote terminal, a mobile terminal (mobile terminal), a wireless communication device, a terminal agent, or a terminal device, etc. The user equipment 101 may have a wireless transceiving function, enabling it to communicate (e.g., wirelessly) with one or more network devices of one or more communication systems and receive network services provided by the network devices. The network devices here include, but are not limited to, the illustrated network device 102.

The user equipment (user equipment, UE) 101 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with wireless communication capabilities, a computing device, other processing device connected to a wireless modem, an in-vehicle device, a wearable device, a terminal device in a future 5G network, or a terminal device in a future evolved PLMN network.

The network device 102 may be an access network device (or called access network site). An access network device refers to a device that provides network access functions, such as a radio access network (radio access network, RAN) base station. Specifically, the network device 102 may include a base station (base station, BS), or a wireless resource management device that includes a base station and is configured to control the base station, etc. The network device 102 may also include a relay station (relay device), an access point, a base station in a future 5G network, a base station in a future evolved PLMN network, or a NR base station. The network device 102 may be a wearable device or an in-vehicle device. The network device 102 may also be a communication chip with a communication module.

For example, the network device 102 includes, but is not limited to, a next-generation base station (gNodeB, gNB) in 5G, an evolved Node B (evolved Node B, eNB) in an LTE system, a radio network controller (radio network controller, RNC), a node B (node B, NB) in a WCDMA system, a wireless controller in a CRAN system, a base station controller (base station controller, BSC), a base transceiver station (base transceiver station, BTS) in a GSM system or a CDMA system, a home base station (e.g., home evolved nodeB or home node B, HNB), a baseband unit (baseband unit, BBU), a transmitting and receiving point (transmitting and receiving point, TRP), a transmitting point (transmitting point, TP), or a mobile switching center.

The user equipment 101 operating in the V2X frequency band has different power configurations for the Physical Sidelink Shared Channel (Physical Sidelink Shared Channel, PSSCH), Physical Sidelink Control Channel (Physical Sidelink Control Channel, PSCCH), Physical Sidelink Feedback Channel (Physical Sidelink Feedback Channel, PSFCH) and Physical Sidelink Broadcast Channel (Physical Sidelink Broadcast Channel, PSBCH).

In relevant protocols, regarding the transmission power of the PSBCH channel, the user equipment 101 can determine the minimum value of the permissible PSBCH transmission power for the user equipment 101, denoted as $P_{CMAX\_L,f,c}$, according to the following formula:

$$P_{CMAX\_L,f,c} = MIN \{P_{PowerClass, V2X}-MAX(MAX(MPR_c , A\text{-}MPR_c) + T_{IB,c} , P\text{-}MPR_c), P_{Regulatory,c}\}.$$

The maximum value of the permissible PSBCH transmission power for the user equipment 101, denoted as $P_{CMAX\_H,f}$, is determined using the following formula:

$$P_{CMAX\_H,f,c} = MIN \{P_{PowerClass, V2X}, P_{Regulatory,c}\}.$$

The user equipment 101 selects a maximum transmission power $P_{CMAX}$ between the minimum value and the maximum value and uses the value of $P_{CMAX}$ as a parameter for subsequent power control. After the user equipment 101 reports $P_{CMAX}$ to the network device 102, the network device 102 may control the transmission power of the UE through a preset power control algorithm.

Here, $P_{PowerClass, V2X}$ indicates a nominal maximum power of the user equipment 101 in a first frequency band, $MPR_c$ indicates a permissible power backoff of the user equipment 101 in the serving cell, $A\text{-}MPR_c$ indicates a permissible additional power backoff of the user equipment 101 in the serving cell, $T_{IB,c}$ indicates a maximum permissible power relaxation of the user equipment 101 in a multi-connectivity scenario supported by the serving cell, $P\text{-}MPR_c$ indicates a maximum power management backoff of the user equipment 101 in the serving cell, and $P_{Regulatory,c}$ indicates a regulatory maximum power value of the user equipment 101 in the serving cell.

Among the parameters involved in the above formula, $P_{PowerClass,V2X}$ depends on the nominal value of the UE itself, while the remaining parameters such as the permissible power backoff of the terminal or the regulatory value are parameters that have already been fixed in the protocol.

For the user equipment 101 engaged in sidelink communication, there are two scenarios: the UE operates within the coverage of the network device 102 and outside the coverage of the network device 102. When sending PSBCH within the coverage of the network device 102, the method for determining $P_{CMAX}$ in relevant protocols does not take into account the maximum permissible power for the cell. This may result in a situation where the power of the sidelink terminal exceeds the maximum permissible power for the cell from the base station, causing interference from the sidelink terminal to the normal communication of other terminals in the cell and the base station. When sending PSBCH outside the coverage of the network device 102, the method for determining $P_{CMAX}$ in relevant protocols fails to consider the power limit between UEs on the sidelink. This may lead to excessively high PSBCH transmission power, resulting in additional interference to the communication of other sidelink terminals.

Therefore, the method for determining $P_{CMAX}$ and the rationality of reporting $P_{CMAX}$ in relevant protocols need to be optimized. For example, there may be a problem where the configured UE power limit is too high, causing additional interference to the communication of other base stations and terminals.

An embodiment of the present disclosure provides a method for transmitting maximum transmission power. Referring to FIG. 2, which shows a method for transmitting maximum transmission power according to an exemplary embodiment. As shown in FIG. 2, the method includes steps S201 to S202, which are specifically as follows.

Step S201: the user equipment 101 determines a maximum transmission power $P_{CMAX}$ for a first channel of a sidelink according to a first power limit; where the first power limit is a permissible power limit when the user equipment 101 camps on a serving cell or is outside a coverage of the serving cell.

In some possible implementations, the first channel may be one of PSSCH, PSCCH, PSFCH or PSBCH. In the embodiment of the present disclosure, the first channel is taken as PSBCH for illustration.

In some possible implementations, when the user equipment 101 is within the coverage of the network device 102, such as camping on a serving cell, the first power limit is the maximum permissible power value for the serving cell. Here, the network device 102 is a network device corresponding to the serving cell.

In this implementation, the first power limit is used to further restrict the transmission power of the user equipment 101, so as to prevent an uplink transmission power of the sidelink UE from exceeding the maximum permissible power value for the network device 102, which would cause interference from the sidelink UE to the normal communication of other terminals in the serving cell and the base station. The maximum permissible power value for the network device 102 can be understood as a threshold or a limit that the uplink transmission power of the UE in the serving cell must satisfy. The maximum permissible power value for the network device 102 is used to indicate that the uplink transmission power of any UE within the coverage of the network device 102 must not exceed this value.

In some possible implementations, when the user equipment 101 is outside the coverage of the network device 102, the first power limit is a transmission power limit between UEs on the sidelink.

In this implementation, the first power limit is used to further restrict the transmission power of the user equipment 101, so as to avoid excessively high PSBCH transmission power, which would cause additional interference to the communication of other sidelink terminals.

In some possible implementations, depending on whether the user equipment 101 is within or outside the coverage of the serving cell, the embodiment of the present disclosure adds the consideration of the first power limit in the process of determining $P_{CMAX}$ to further limit the maximum transmission power, ensuring that when sending PSBCH, no excessive additional interference is caused to other base stations and UEs.

Step S202: The user equipment 101 sends the maximum transmission power $P_{CMAX}$ to the network device 102.

In some possible implementations, after determining $P_{CMAX}$, the user equipment 101 may report $P_{CMAX}$ to the network device 102.

In some possible implementations, after receiving $P_{CMAX}$, the network device 102 may control the sidelink transmission power of the UE through a preset power control algorithm. Alternatively, the network device 102 may control an uplink duty cycle during the uplink transmission process of the user equipment 101.

In the embodiment of the present disclosure, the user equipment 101 determines $P_{CMAX}$ according to the permissible power limit when the user equipment camps on or does not camp on the serving cell. During the process of determining $P_{CMAX}$, the power limits in both scenarios (i.e., the user equipment 101 being within and outside the coverage of the network device 102) can be considered, aiming to reduce interference to other devices while ensuring the uplink coverage effect, thereby obtaining a more reasonable $P_{CMAX}$,

An embodiment of the present disclosure provides a method for transmitting indication information. Referring to FIG. 3, which shows a method for transmitting indication information according to an exemplary embodiment. As shown in FIG. 3, the method includes steps S301 to S304, which are specifically as follows.

Step S301: the network device 102 sends indication information to the user equipment 101, where the indication information is used to indicate a first power limit when the user equipment 101 camps on a serving cell, and the first power limit is a maximum permissible power value for the serving cell.

In some possible implementations, the network device 102 may send the indication information through Radio Resource Control (Radio Resource Control, RRC) signaling.

In some possible implementations, the network device 102 may directly or indirectly indicate the first power limit through the indication information.

Step S302: the user equipment 101 receives the indication information.

Step S303: the user equipment 101 determines a maximum transmission power $P_{CMAX}$ for a first channel of a sidelink according to the first power limit; where the first power limit is a permissible power limit when the user equipment 101 camps on the serving cell or is outside the coverage of the serving cell.

Step S304: the user equipment 101 sends the maximum transmission power $P_{CMAX}$ to the network device 102.

In the embodiment of the present disclosure, which is applicable to the scenario where the user equipment 101 is within the coverage of the network device 102, the network device 102 sends the indication information to the user equipment 101 to inform the corresponding power limit within the coverage of the serving cell, i.e., the maximum permissible power value for the serving cell. This enables the user equipment 101 to determine a more reasonable $P_{CMAX}$, aiming to reduce interference to other devices while ensuring the uplink coverage effect.

An embodiment of the present disclosure provides a method for determining transmission power, which is performed by the user equipment 101. Referring to FIG. 4, which shows a method for determining transmission power according to an exemplary embodiment. As shown in FIG. 4, the method includes step S401, which is specifically as follows.

Step S401: the user equipment 101 determines a maximum transmission power $P_{CMAX}$ for a first channel of a sidelink according to a first power limit; where the first power limit is a permissible power limit when the user equipment camps on a serving cell or is outside a coverage of the serving cell.

In some possible implementations, the first channel may be one of PSSCH, PSCCH, PSFCH or PSBCH. In the embodiment of the present disclosure, the first channel is taken as PSBCH for illustration.

In some possible implementations, when the user equipment 101 is within the coverage of the network device 102, such as camping on a serving cell, the first power limit is the maximum permissible power value for the serving cell. Here, the network device 102 is a network device corresponding to the serving cell.

In this implementation, the first power limit is used to further restrict the transmission power of the user equipment 101, so as to prevent an uplink transmission power of the sidelink UE from exceeding the maximum permissible power value for the network device 102, which would cause interference from the sidelink UE to the normal communication of other terminals in the serving cell and the base station. The maximum permissible power value for the network device 102 can be understood as a threshold or a limit that the uplink transmission power of the UE in the serving cell must satisfy. The maximum permissible power value for the network device 102 is used to indicate that the uplink transmission power of any UE within the coverage of the network device 102 must not exceed this value.

In some possible implementations, when the user equipment 101 is outside the coverage of the network device 102, the first power limit is a transmission power limit between UEs on the sidelink.

In this implementation, the first power limit is used to further restrict the transmission power of the user equipment 101, so as to avoid excessively high PSBCH transmission power, which would cause additional interference to the communication of other sidelink terminals.

In some possible implementations, depending on whether the user equipment 101 is within or outside the coverage of the serving cell, the embodiment of the present disclosure adds the consideration of the first power limit in the process of determining PCMAX to further limit the maximum transmission power, ensuring that when sending PSBCH, no excessive additional interference is caused to other base stations and UEs.

In some possible implementations, after determining $P_{CMAX}$, the user equipment 101 may report $P_{CMAX}$ to the network device 102. After receiving $P_{CMAX}$, the network device 102 may control the sidelink transmission power of the UE through a preset power control algorithm. Alternatively, the network device 102 may control an uplink duty cycle during the uplink transmission process of the user equipment 101.

In the embodiment of the present disclosure, the user equipment 101 determines $P_{CMAX}$ according to the permissible power limit when the user equipment camps on or does not camp on the serving cell. During the process of determining $P_{CMAX}$, the power limits in both scenarios (i.e., the user equipment 101 being within and outside the coverage of the network device 102) can be considered, aiming to reduce interference to other devices while ensuring the uplink coverage effect, thereby obtaining a more reasonable $P_{CMAX}$.

An embodiment of the present disclosure provides a method for determining transmission power, which is performed by the user equipment 101. The method includes step S401, which is specifically as follows.

Step S401: the user equipment 101 determines a maximum transmission power $P_{CMAX}$ for a first channel of a sidelink according to a first power limit; where the first power limit is a permissible power limit when the user equipment camps on a serving cell or is outside a coverage of the serving cell.

When the user equipment 101 camps on the serving cell, the first power limit is a maximum permissible power value for the serving cell.

In the embodiment of the present disclosure, in the scenario where the user equipment 101 is within the coverage of the network device 102, the first power limit is the maximum permissible power value for the serving cell. Thus, the transmission power of the user equipment 101 can be further restricted in combination with this maximum permissible power value for the serving cell, so as to avoid interference to the normal communication of other terminals in the serving cell and the base station due to the power of the sidelink user equipment 101 exceeding the maximum permissible power for the cell.

An embodiment of the present disclosure provides a method for determining transmission power, which is performed by the user equipment 101. The method includes steps S400 to S401, which are specifically as follows.

Step S400: The user equipment 101 receives indication information sent by a network device of a serving cell, where the indication information is used to indicate a maximum permissible power value for the serving cell.

In some possible implementations, the indication information is used to indicate the maximum permissible power value for the serving cell, that is, a first power limit.

In some possible implementations, the user equipment 101 may receive the indication information sent by the network device 102 through RRC signaling.

In some possible implementations, the indication information may directly or indirectly indicate the first power limit.

In an example, the indication information indicates the first power limit through a preset number of bits. In a possible example, the indication information indicates the first power limit through 2 bits. For instance, when the 2-bit value is 00, it corresponds to the first power limit P1; when the 2-bit value is 01, it corresponds to the first power limit P2; when the 2-bit value is 11, it corresponds to the first power limit P3; and when the 2-bit value is 10, it corresponds to the first power limit P4.

Step S401: the user equipment 101 determines a maximum transmission power $P_{CMAX}$ for a first channel of a sidelink according to a first power limit; where the first power limit is a permissible power limit when the user equipment camps on the serving cell or is outside the coverage of the serving cell.

In the embodiment of the present disclosure, when the user equipment 101 is within the coverage of the serving cell, the network device 102 may send indication information to the user equipment 101 to deliver the first power limit. Thus, the user equipment 101 can determine a reasonable $P_{CMAX}$, so as to avoid interference to the communication of the terminals and the base station in the serving cell due to excessive transmission power.

An embodiment of the present disclosure provides a method for determining transmission power, which is performed by the user equipment 101. The method includes step S401', which is specifically as follows.

Step S401': the user equipment 101 determines a lower limit value $P_{CMAX\_L,f,c}$ and an upper limit value $P_{CMAX\_H,f}$ of a maximum transmission power according to a first power limit, and determines $P_{CMAX}$ within an interval $[P_{CMAX\_L,f,c}, P_{CMAX\_H,f}]$.

Here, $P_{CMAX\_L,f,c}$ satisfies:

$P_{CMAX\_L,f,c} =$ MIN {*p-max*, $P_{PowerClass, V2X}$-MAX(MAX($MPR_c$ , $A\text{-}MPR_c$) + $T_{IB,c}$ , $P\text{-}MPR_c$), $P_{Regulatory,c}$};

$P_{CMAX\_H,f}$, satisfies:

$$P_{CMAX\_H,f,c} = MIN \{p\text{-}max, P_{PowerClass, V2X}, P_{Regulatory,c}\}.$$

Here, *p-max* indicates the maximum permissible power value for the serving cell, $P_{PowerClass, V2X}$ indicates a nominal maximum power of the user equipment in a first frequency band, $MPR_c$ indicates a permissible power backoff of the user equipment in the serving cell, $A\text{-}MPR_c$ indicates a permissible additional power backoff of the user equipment in the serving cell, $T_{IB,c}$ indicates a maximum permissible power relaxation of the user equipment in a multi-connectivity scenario supported by the serving cell, $P\text{-}MPR_c$ indicates a maximum power management backoff of the user equipment in the serving cell, and $P_{Regulatory,c}$ indicates a regulatory maximum power value of the user equipment in the serving cell.

It can be understood that the user equipment 101 may pre-configure the nominal maximum power $P_{PowerClass,V2X}$ for each frequency band in multiple frequency bands respectively. $P_{PowerClass,V2X}$ is calibrated by the manufacturer of the user equipment 101, and in other implementations, it may also be referred to as rated power.

In some possible implementations, the first power limit is the maximum permissible power value *p-max* for the serving cell, which is configured or indicated by the network device 102. After the user equipment 101 determines $P_{CMAX\_L,c}$ and $P_{CMAX\_H,f}$, according to the first power limit, $P_{CMAX}$ satisfies $P_{CMAX\_L,f,c} \leq P_{CMAX} \leq P_{CMAX\_H,f,c}$, so that $P_{CMAX}$ can be determined according to the first power limit.

In the embodiment of the present disclosure, when the user equipment 101 is within the coverage of the serving cell, the first power limit is the maximum permissible power value *p-max* for the serving cell. The user equipment 101 considers this first power limit when determining $P_{CMAX}$ to further restrict its transmission power, so as to prevent the power of the sidelink UE from exceeding the maximum permissible power for the network device 102, which would cause interference from the sidelink UE to the normal communication of other terminals in the serving cell and the base station.

An embodiment of the present disclosure provides a method for determining transmission power, which is performed by the user equipment 101. The method includes step S401, which is specifically as follows.

Step S401: the user equipment 101 determines a maximum transmission power $P_{CMAX}$ for a first channel of a sidelink according to a first power limit; where the first power limit is a permissible power limit when the user equipment camps on a serving cell or is outside a coverage of the serving cell.

When the user equipment 101 is outside the coverage of the serving cell, the first power limit is a maximum value among maximum permissible transmission powers for a plurality of sidelink resource pools of the user equipment 101.

In some possible implementations, among the plurality of sidelink resource pools of the user equipment 101, each resource pool generally includes resources of data channels such as PSSCH or control channels such as PSCCH, while PSBCH is not allocated in the resource pools.

In some possible implementations, in the configuration information corresponding to each sidelink resource pool, the maximum permissible transmission power *sl-maxTransPower* for the resource pool may be indicated. In the embodiment of the present disclosure, the power limit *sl-maxTransPower* for the resource pool is applied to the process of determining the transmission power of PSBCH.

Assuming that the user equipment 101 corresponds to n sidelink resource pools, and the maximum permissible transmission power for the $i^{th}$ (i=1, 2, ..., n) resource pool is *sl-maxTransPower$_i$*, then the maximum value among the maximum permissible transmission powers for the n resource pools is *sl-maxTransPower$_{max}$*=max{*sl-maxTransPower$_1$*, *sl-maxTransPower$_2$*, ..., *sl-maxTransPower$_n$*}, that is, the first power limit is *sl-maxTransPower$_{max}$*, or simply denoted as *maxTransPower$_{max}$*.

In the embodiment of the present disclosure, when the user equipment 101 is outside the coverage of the serving cell, selecting the maximum value among the maximum permissible transmission powers for the plurality of sidelink resource pools as the first power limit can further limit the transmission power of the user equipment 101 to reduce interference to other terminals while ensuring that the user equipment 101 still has sufficient transmission power.

An embodiment of the present disclosure provides a method for determining transmission power, which is performed by the user equipment 101. The method includes step S401, which is specifically as follows.

Step S401: the user equipment 101 determines a maximum transmission power $P_{CMAX}$ for a first channel of a sidelink according to a first power limit; where the first power limit is a permissible power limit when the user equipment camps on a serving cell or is outside a coverage of the serving cell.

When the user equipment 101 is outside the coverage of the serving cell, the first power limit is a minimum value among maximum permissible transmission powers for a plurality of sidelink resource pools of the user equipment 101.

In some possible implementations, combined with the description of the foregoing embodiments, assuming that the user equipment 101 corresponds to n sidelink resource pools, and the maximum permissible transmission power for the $i^{th}$ (i=1, 2, ..., n) resource pool is *sl-maxTransPower$_i$*, then the minimum value among the maximum permissible transmission powers for the n resource pools is $sl\text{-}maxTransPower_{min} = min\{sl\text{-}maxTransPower_1, sl\text{-}maxTransPower_2, ..., sl\text{-}maxTransPower_n\}$, that is, the first power limit is $sl\text{-}maxTransPower_{min}$, or simply denoted as $maxTransPower_{min}$.

In the embodiment of the present disclosure, when the user equipment 101 is outside the coverage of the serving cell, selecting the minimum value among the maximum permissible transmission powers for the plurality of sidelink resource pools as the first power limit can more effectively reduce the transmission power of the user equipment 101 to reduce interference to other terminals.

It is worth noting that compared with the method of selecting the maximum value, the method of selecting the minimum value will result in a smaller transmission power of the user equipment 101. Therefore, the maximum value or the minimum value among the maximum permissible transmission powers for the plurality of sidelink resource pools can be selected as the first power limit according to actual needs.

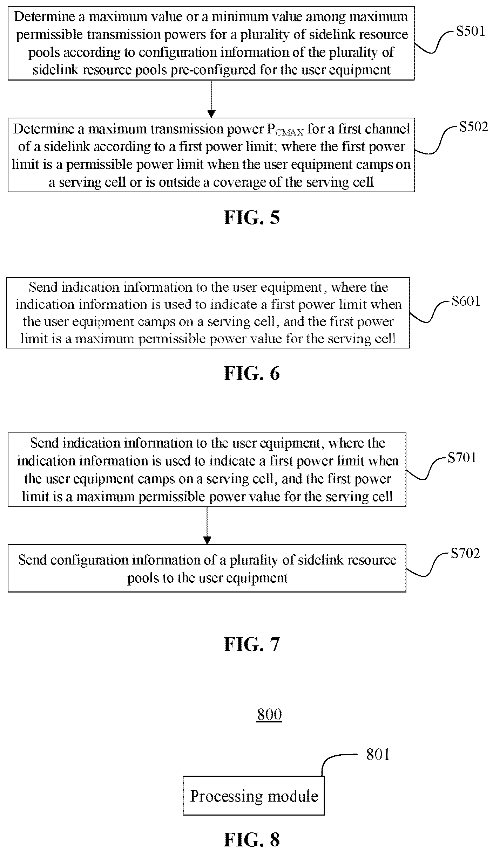

An embodiment of the present disclosure provides a method for determining transmission power, which is performed by the user equipment 101. Referring to FIG. 5, which shows a method for determining transmission power according to an exemplary embodiment. As shown in FIG. 5, the method includes steps S501 to S502, which are specifically as follows.

Step S501: the user equipment 101 determines a maximum value or a minimum value among maximum permissible transmission powers for a plurality of sidelink resource pools according to configuration information of the plurality of sidelink resource pools pre-configured for the user equipment.

In some possible implementations, in the configuration information corresponding to each sidelink resource pool, the maximum permissible transmission power $sl\text{-}maxTransPower$ for the resource pool may be indicated.

It can be understood that each resource pool generally includes resources of data channels such as PSSCH or control channels such as PSCCH, while PSBCH is not allocated in the resource pools. In the embodiment of the present disclosure, the power limit $sl\text{-}maxTransPower$ for the resource pool is applied to the process of determining the transmission power of PSBCH.

Step S502: the user equipment 101 determines a maximum transmission power $P_{CMAX}$ for a first channel of a sidelink according to a first power limit; where the first power limit is a permissible power limit when the user equipment camps on a serving cell or is outside a coverage of the serving cell.

In the embodiment of the present disclosure, which is applicable to the scenario where the user equipment 101 is outside the coverage of the serving cell, the user equipment 101 pre-configures a plurality of sidelink resource pools by itself, and determines $maxTransPower_{max}$ or $maxTransPower_{min}$ according to the configuration information of each resource pool.

An embodiment of the present disclosure provides a method for determining transmission power, which is performed by the user equipment 101. The method includes steps S501' to S502, which are specifically as follows.

Step S501': receiving configuration information of a plurality of sidelink resource pools sent by a network device of a serving cell, and determining a maximum value or a minimum value among maximum permissible transmission powers for the plurality of sidelink resource pools.

In some possible implementations, in the configuration information corresponding to each sidelink resource pool, the maximum permissible transmission power $sl\text{-}maxTransPower$ for the resource pool may be indicated.

It can be understood that each resource pool generally includes resources of data channels such as PSSCH or control channels such as PSCCH, while PSBCH is not allocated in the resource pools. In the embodiment of the present disclosure, the power limit $sl\text{-}maxTransPower$ for the resource pool is applied to the process of determining the transmission power of PSBCH.

Step S502: the user equipment 101 determines a maximum transmission power $P_{CMAX}$ for a first channel of a sidelink according to a first power limit; where the first power limit is a permissible power limit when the user equipment camps on a serving cell or is outside a coverage of the serving cell.

In the embodiments of the present disclosure, which is applicable to the scenario where the user equipment 101 is outside the coverage of the serving cell, the network device 102 pre-configures a plurality of sidelink resource pools for the user equipment 101. Thus, the user equipment 101 can determine $sl\text{-}maxTransPower_{max}$ or $sl\text{-}maxTransPower_{min}$ according to the configuration information of each resource pool delivered by the network device 102.

An embodiment of the present disclosure provides a method for determining transmission power, which is performed by the user equipment 101. The method includes steps S501 to S502, or steps S501' to S502, where step S502 may include the following step S502'.

Step S502': determining a lower limit value $P_{CMAX\_L,f,c}$ and an upper limit value $P_{CMAX\_H,f}$, of the maximum transmission power according to the first power limit, and determining $P_{CMAX}$ within an interval $[P_{CMAX\_L,f,c}, P_{CMAX\_H,f}]$;

where $P_{CMAX\_L,f,c}$ satisfies:

$$P_{CMAX\_L,f,c} = MIN\{maxTransPower_{max}, P_{PowerClass,V2X} - MAX(MAX(MPR_c, A\text{-}MPR_c) + T_{IB,c}, P\text{-}MPR_c), P_{Regulatory,c}\};$$

$P_{CMAX\_H,f}$, satisfies:

$$P_{CMAX\_H,f,c} = MIN \{maxTransPower, P_{PowerClass, V2X}, P_{Regulatory,c}\};$$

here, $maxTransPower$ indicates the maximum value or the minimum value among the maximum permissible transmission powers for the plurality of resource pools.

In some possible implementations, the description is given by taking the selection of the maximum value $maxTransPower_{max}$ among the maximum permissible transmission powers for the plurality of resource pools as the first power limit as an example.

The user equipment 101 determines the following according to the first power limit:

$$P_{CMAX\_L,f,c} = MIN \{maxTransPower_{max}, P_{PowerClass,V2X}-MAX(MAX(MPR_c , A-MPR_c) + T_{IB,c} , P-MPR_c), P_{Regulatory,c}\};$$

$$P_{CMAX\_H,f,c} = MIN \{maxTransPower_{max}, P_{PowerClass, V2X}, P_{Regulatory,c}\}.$$

After determining $P_{CMAX\_L,f,c}$ and $P_{CMAX\_H,f}$, respectively, $P_{CMAX}$ satisfies $P_{CMAX\_L,f,c} \leq P_{CMAX} \leq P_{CMAX H,f,c}$, so that the user equipment 101 can determine $P_{CMAX}$ according to the first power limit.

In the embodiment of the present disclosure, when the user equipment 101 is outside the coverage of the serving cell, the first power limit is a maximum value or a minimum value among the maximum permissible transmission powers for a plurality of resource pools, and the user equipment 101 considers this first power limit when determining $P_{CMAX}$ to further restrict the transmission power of the user equipment 101. For example, selecting the maximum value among the maximum permissible transmission powers for the plurality of sidelink resource pools as the first power limit can further limit the transmission power of the user equipment 101 to reduce interference to other terminals while ensuring that the user equipment 101 still has sufficient transmission power. For another example, selecting the minimum value among the maximum permissible transmission powers for the plurality of sidelink resource pools as the first power limit can more effectively reduce the transmission power of the user equipment 101 to reduce interference to other terminals.

An embodiment of the present disclosure provides a method for sending indication information, which is performed by the network device 102. Referring to FIG. 6, which shows a method for sending indication information according to an exemplary embodiment. As shown in FIG. 6, the method includes step S601, which is specifically as follows.

Step S601: the network device 102 sends indication information to the user equipment 101, where the indication information is used to indicate a first power limit when the user equipment 101 camps on a serving cell, and the first power limit is a maximum permissible power value for the serving cell.

In some possible implementations, the network device 102 may deliver the indication information by sending RRC signaling.

For example, this step S601 includes step S601', which is specifically as follows.

Step S601': the network device 102 sends radio resource control (RRC) signaling to the user equipment 101, where the RRC signaling includes the indication information.

In some possible implementations, the network device 102 may directly or indirectly indicate the first power limit through the indication information.

In an example, the indication information indicates the first power limit through a preset number of bits.

In a possible example, the indication information indicates the first power limit through 2 bits.

For instance, when the 2-bit value is 00, it corresponds to the first power limit P1; when the 2-bit value is 01, it corresponds to the first power limit P2; when the 2-bit value is 11, it corresponds to the first power limit P3; and when the 2-bit value is 10, it corresponds to the first power limit P4.

In the embodiment of the present disclosure, the network device 102 sends indication information to the user equipment 101 to inform the corresponding power limit within the coverage of the serving cell, that is, the maximum permissible power value for the serving cell. This enables the user equipment 101 to determine a more reasonable $P_{CMAX}$, aiming to reduce interference to other devices while ensuring the uplink coverage effect.

An embodiment of the present disclosure provides a method for sending indication information, which is performed by the network device 102. Referring to FIG. 7, which shows a method for sending indication information according to an exemplary embodiment. As shown in FIG. 7, the method includes steps S701 to S702, which are specifically as follows.

Step S701: the network device 102 sends indication information to the user equipment 101, where the indication information is used to indicate a first power limit when the user equipment camps on a serving cell, and the first power limit is a maximum permissible power value for the serving cell.

Step S702: the network device 102 sends configuration information of a plurality of sidelink resource pools to the user equipment 101.

The order of steps S701 and S702 is only for illustration and not for limitation. For example, step S702 may be executed first, or steps S701 and S702 may be executed synchronously.

In the embodiment of the present disclosure, the network device 102 may deliver indication information to the user equipment 101 to indicate the first power limit, and may also deliver configuration information of resource pools to the user equipment 101, so that the user equipment 101 can determine the first power limit by itself.

Based on the same concept as the above method embodiments, an embodiment of the present disclosure further provides an apparatus for determining transmission power. This apparatus may have the functions of the user equipment 101 in the above method embodiments and may be configured to execute the steps performed by the user equipment 101 provided in the above method embodiments. The functions can be implemented by hardware, or by software or hardware executing corresponding software. The hardware or software includes one or more modules corresponding to the above functions.

In a possible implementation, the apparatus 800 shown in FIG. 8 may serve as the user equipment 101 involved in the above method embodiments and execute the steps performed by the user equipment 101 in the above method embodiments. As shown in FIG. 8, the apparatus 800 may include a processing module 801, where the processing module 801 may be configured to support a communication apparatus in performing communication.

When executing the steps implemented by the user equipment 101, the processing module 801 is configured to determine a maximum transmission power $P_{CMAX}$ for a first channel of a sidelink according to a first power limit; where the first power limit is a permissible power limit when the user equipment camps on a serving cell or is outside a coverage of the serving cell.

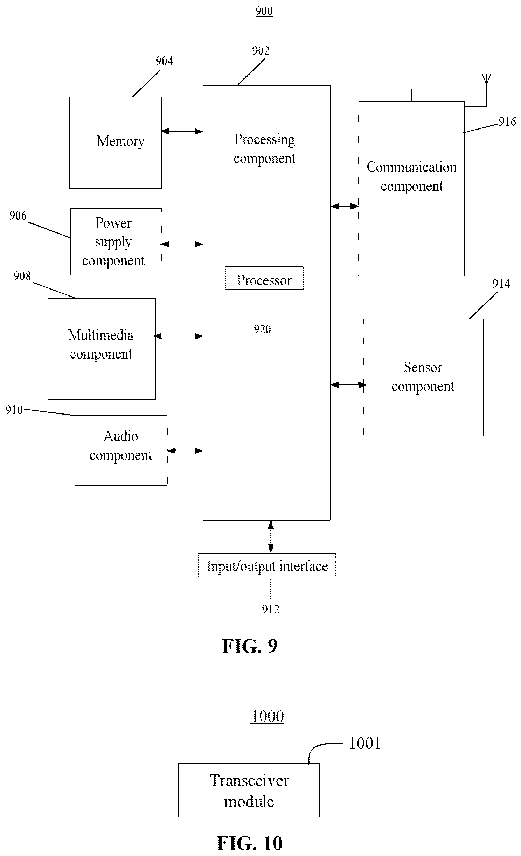

When the apparatus for receiving configuration information is the user equipment 101, its structure may be as shown in FIG. 9. The apparatus 900 may be a mobile phone, a computer, a digital broadcast terminal, a messaging device, a game console, a tablet device, a medical device, a fitness device, a personal digital assistant, and the like.

Referring to FIG. 9, the apparatus 900 may include one or more of the following components: a processing component 902, a memory 904, a power supply component 906, a multimedia component 908, an audio component 910, an input/output (I/O) interface 912, a sensor component 914 and a communication component 916.

The processing component 902 generally controls the overall operations of the apparatus 900, such as operations associated with display, phone calls, data communication, camera operations and recording operations. The processing component 902 may include one or more processors 920 to execute instructions to complete all or part of the steps of the above-described methods. In addition, the processing component 902 may include one or more modules to facilitate interaction between the processing component 902 and other components. For example, the processing component 902 may include a multimedia module to facilitate interaction between the multimedia component 908 and the processing component 902.

The memory 904 is configured to store various types of data to support operations on the apparatus 900. Examples of such data include instructions for any application or method operating on the apparatus 900, contact data, phonebook data, messages, pictures, videos, and the like. The memory 904 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 906 provides power to various components of the apparatus 900. The power supply component 906 may include a power management system, one or more power supplies and other components associated with generating, managing and distributing power for the apparatus 900.

The multimedia component 908 includes a screen that provides an output interface between the apparatus 900 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touches, swipes and gestures on the touch panel. The touch sensors can not only sense the boundary of a touch action or a swipe action but also detect a duration and a pressure associated with the touch operation or the swipe operation. In some embodiments, the multimedia component 908 includes a front camera and/or a rear camera. When the apparatus 900 is in an operation mode, such as a shooting mode or a video mode, the front camera and/or the rear camera can receive external multimedia data. Each of the front camera and the rear camera may be a fixed optical lens system or have focal length and optical zoom capabilities.

The audio component 910 is configured to output and/or input audio signals. For example, the audio component 910 includes a microphone (MIC). When the apparatus 900 is in an operation mode, such as a call mode, a recording mode and a voice recognition mode, the microphone is configured to receive external audio signals. The received audio signals may be further stored in the memory 904 or sent via the communication component 916. In some embodiments, the audio component 910 further includes a speaker for outputting audio signals.

The I/O interface 912 provides an interface between the processing component 902 and a peripheral interface module, and the peripheral interface module may be a keyboard, a click wheel, buttons or the like. These buttons may include, but are not limited to, a home button, a volume button, a start button and a lock button.

The sensor component 914 includes one or more sensors for providing status assessments of various aspects for the apparatus 900. For example, the sensor component 914 can detect the on/off state of the apparatus 900, the relative positioning of components such as the display and the keypad of the apparatus 900, and the sensor component 914 can also detect changes in the position of the apparatus 900 or a component of the apparatus 900, the presence or absence of user contact with the apparatus 900, the orientation or acceleration/deceleration of the apparatus 900, and temperature changes of the apparatus 900. The sensor component 914 may include a proximity sensor configured to detect the presence of nearby objects without any physical contact. The sensor component 914 may also include an optical sensor, such as a CMOS or CCD image sensor, for use in imaging applications. In some embodiments, the sensor component 914 may further include an acceleration sensor, a gyroscope sensor, a magnetic sensor, a pressure sensor, or a temperature sensor.

The communication component 916 is configured to facilitate wired or wireless communication between the apparatus 900 and other devices. The apparatus 900 can access a wireless network based on a communication standard, such as WiFi, 2G or 3G, or a combination thereof. In an exemplary embodiment, the communication component 916 receives a broadcast signal or broadcast-related information from an external broadcast management system via a broadcast channel. In an exemplary embodiment, the communication component 916 further includes a near-field communication (NFC) module to facilitate short-range communication. For example, the NFC module can be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 900 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components for performing the above methods.

In an exemplary embodiment, there is further provided a non-transitory computer-readable storage medium including instructions, such as the memory 904 including instructions, and the instructions can be executed by the processor 920 of the apparatus 900 to complete the above methods. For example, the non-transitory computer-readable storage medium may be a ROM, a random access memory (RAM), a CD-ROM, a magnetic tape, a floppy disk, an optical data storage device, and the like.

Based on the same concept as the above method embodiments, an embodiment of the present disclosure provides an apparatus for sending indication information. This apparatus may have the functions of the network device 102 in the above method embodiments and may be used to execute the steps performed by the network device 102 provided in the above method embodiments. The functions may be implemented by hardware, or by software or hardware executing corresponding software. The hardware or software includes one or more modules corresponding to the above functions.

In a possible implementation, the apparatus 1000 shown in FIG. 10 may serve as the network device 102 involved in the above method embodiments and execute the steps performed by the first network device 102 in the above method embodiments. As shown in FIG. 10, the apparatus 1000 may include a transceiver module 1001 coupled to each other, where the transceiver module 1001 can be used to support a communication apparatus in performing communication.

When executing the steps implemented by the network device 102, the transceiver module 1001 is configured to send indication information to the user equipment 101, where the indication information is used to indicate the first power limit when the user equipment 101 camps on the serving cell, and the first power limit is the maximum permissible power value for the serving cell.

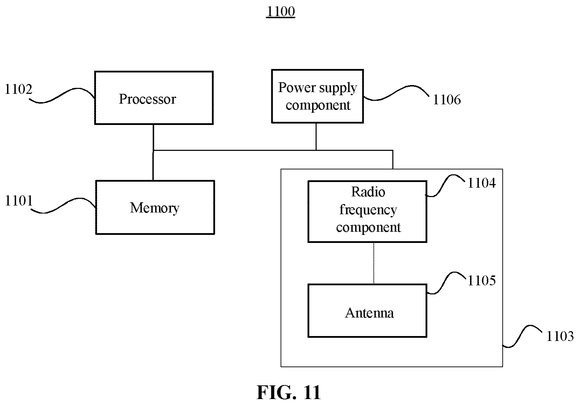

When the communication apparatus is the network device 102, its structure may be as shown in FIG. 11. The structure of the communication apparatus is illustrated by taking a base station as an example. As shown in FIG. 11, the apparatus 1100 includes a memory 1101, a processor 1102, a transceiver component 1103 and a power supply component 1106. The memory 1101 is coupled to the processor 1102 and can be used to store programs and data necessary for the communication apparatus 1100 to implement various functions. The processor 1102 is configured to support the communication apparatus 1100 in executing corresponding functions in the above methods, and the functions can be implemented by calling programs stored in the memory 1101. The transceiver component 1103 may be a wireless transceiver, which can be used to support the communication apparatus 1100 in receiving signaling and/or data and sending signaling and/or data through a wireless air interface. The transceiver component 1103 may also be referred to as a transceiver unit or a communication unit. The transceiver component 1103 may include a radio frequency component 1104 and one or more antennas 1105, where the radio frequency component 1104 may be a remote radio unit (remote radio unit, RRU), and specifically may be used for transmitting radio frequency signals and converting between radio frequency signals and baseband signals. The one or more antennas 1105 may specifically be used for radiating and receiving radio frequency signals.

When the communication apparatus 1100 needs to send data, the processor 1102 may perform baseband processing on the data to be sent, output a baseband signal to the radio frequency unit, and the radio frequency unit performs radio frequency processing on the baseband signal and then sends the radio frequency signal through the antennas in the form of electromagnetic waves. When there is data sent to the communication apparatus 1100, the radio frequency unit receives the radio frequency signal through the antennas, converts the radio frequency signal into a baseband signal, and outputs the baseband signal to the processor 1102, and the processor 1102 converts the baseband signal into data and processes the data.

Other implementations of the present disclosure will be readily apparent to those skilled in the art after considering the specification and practicing the invention disclosed herein. The present disclosure is intended to cover any variations, uses, or adaptive changes of the embodiments of the present disclosure, which follow the general principles of the embodiments of the present disclosure and include common knowledge or conventional technical means in the technical field not disclosed in the present disclosure. The specification and embodiments are only regarded as exemplary, and the true scope and spirit of the embodiments of the present disclosure are pointed out by the following claims.

It should be understood that the embodiments of the present disclosure are not limited to the precise structures described above and shown in the drawings, and various modifications and changes can be made without departing from their scope. The scope of the embodiments of the present disclosure is only limited by the appended claims.

Industrial Applicability

In the method of the present disclosure, the user equipment determines $P_{CMAX}$ according to a permissible power limit when the user equipment camps on or does not camp on the serving cell. During the process of determining $P_{CMAX}$, the power limits in both scenarios (i.e., the user equipment being within and outside the coverage of the network device) can be considered, aiming to reduce interference to other devices while ensuring the uplink coverage effect, thereby obtaining a more reasonable $P_{CMAX}$.

**Claims**

1. A method for determining transmission power, performed by a user equipment, wherein the method comprises:

    determining, according to a first power limit, a maximum transmission power $P_{CMAX}$ for a first channel of a sidelink; wherein the first power limit is a permissible power limit when the user equipment camps on a serving cell or is outside a coverage of the serving cell.

2. The method according to claim 1, wherein when the user equipment camps on the serving cell, the first power limit is a maximum permissible power value for the serving cell.

3. The method according to claim 2, further comprising:
   receiving indication information sent by a network device of the serving cell, wherein the indication information is used to indicate the maximum permissible power value for the serving cell.

4. The method according to claim 2 or 3, wherein the determining, according to the first power limit, the maximum transmission power $P_{CMAX}$ for the first channel of the sidelink comprises:

    determining, according to the first power limit, a lower limit value $P_{CMAX\_L,f,c}$ and an upper limit value $P_{CMAX\_H,f}$ of the maximum transmission power, and determining the $P_{CMAX}$ within an interval $[P_{CMAX\_L,f,c}, P_{CMAX\_H,f}]$; wherein the $P_{CMAX\_L,f,c}$ satisfies:

    $P_{CMAX\_L,f,c} = MIN \{p\text{-}max, P_{PowerClass,V2X}\text{-}MAX(MAX(MPR_c, A\text{-}MPR_c) + T_{IB,c}, P\text{-}MPR_c), P_{Regulatory,c}\};$

    and
    the $P_{CMAX\_H,f}$ satisfies:

$$P_{CMAX\_H,f,c} = MIN \{p\text{-}max, P_{PowerClass, V2X}, P_{Regulatory,c}\};$$

wherein *p-max* indicates the maximum permissible power value for the serving cell, $P_{PowerClass, V2X}$ indicates a nominal maximum power of the user equipment in a first frequency band, $MPR_c$ indicates a permissible power backoff of the user equipment in the serving cell, $A\text{-}MPR_c$ indicates a permissible additional power backoff of the user equipment in the serving cell, $T_{IB,c}$ indicates a maximum permissible power relaxation of the user equipment in a multi-connectivity scenario supported by the serving cell, $P\text{-}MPR_c$ indicates a maximum power management backoff of the user equipment in the serving cell, and $P_{Regulatory,c}$ indicates a regulatory maximum power value of the user equipment in the serving cell.

5. The method according to claim 1, wherein when the user equipment is outside the coverage of the serving cell, the first power limit is a maximum value among maximum permissible transmission powers for a plurality of sidelink resource pools of the user equipment.

6. The method according to claim 1, wherein when the user equipment is outside the coverage of the serving cell, the first power limit is a minimum value among maximum permissible transmission powers for a plurality of sidelink resource pools of the user equipment.

7. The method according to claim 5 or 6, further comprising:
determining, according to configuration information of the plurality of sidelink resource pools pre-configured for the user equipment, a maximum value or a minimum value among the maximum permissible transmission powers for the plurality of sidelink resource pools.

8. The method according to claim 5 or 6, further comprising:

receiving configuration information of the plurality of sidelink resource pools sent by a network device of the serving cell; and
determining a maximum value or a minimum value among the maximum permissible transmission powers for the plurality of sidelink resource pools.

9. The method according to any one of claims 5 to 8, wherein the determining, according to the first power limit, the maximum transmission power $P_{CMAX}$ for the first channel of the sidelink comprises:

determining, according to the first power limit, a lower limit value $P_{CMAX\_L,f,c}$ and an upper limit value $P_{CMAX\_H,f}$, of the maximum transmission power, and determining the $P_{CMAX}$ within an interval $[P_{CMAX\_L,f,c}, P_{CMAX\_H,f}]$;
wherein the $P_{CMAX\_L,f,c}$ satisfies:

$P_{CMAX\_L,f,c} = \text{MIN}\{\text{p-max}, P_{PowerClass,V2X}\text{-MAX}(\text{MAX}(MPR_c, A\text{-}MPR_c) + T_{IB,c}, P\text{-}MPR_c), P_{Regulatory,c}\}$;

and
the $P_{CMAX\_H,f}$, satisfies:

$$P_{CMAX\_H,f,c} = \text{MIN}\{maxTransPower, P_{PowerClass, V2X}, P_{Regulatory,c}\};$$

wherein *maxTransPower* indicates a maximum value or a minimum value among the maximum permissible transmission powers for the plurality of resource pools.

10. A method for sending indication information, performed by a network device, wherein the method comprises:
sending indication information to a user equipment, where the indication information is used to indicate a first power limit when the user equipment camps on a serving cell, and the first power limit is a maximum permissible power value for the serving cell.

11. The method according to claim 10, wherein the sending the indication information to the user equipment comprises:
sending radio resource control RRC signaling to the user equipment, wherein the RRC signaling comprises the indication information.

12. The method according to claim 10, further comprising:
sending configuration information of a plurality of sidelink resource pools to the user equipment.

**13.** An apparatus for determining transmission power, configured in a user equipment, wherein the apparatus comprises:

a processing module, configured to determine a maximum transmission power $P_{CMAX}$ for a first channel of a sidelink according to a first power limit;
wherein the first power limit is a permissible power limit when the user equipment camps on a serving cell or is outside a coverage of the serving cell.

**14.** An apparatus for sending indication information, configured in a network device, wherein the apparatus comprises:
a transceiver module, configured to send indication information to a user equipment, wherein the indication information is used to indicate a first power limit when the user equipment camps on a serving cell, and the first power limit is a maximum permissible power value for the serving cell.

**15.** A user equipment, comprising one or more processors and a memory;

wherein the memory is configured to store a computer program; and
the one or more processors are configured to execute the computer program to perform the method according to any one of claims 1 to 9.

**16.** A network device, comprising one or more processors and a memory;

wherein the memory is configured to store a computer program; and
the one or more processors are configured to execute the computer program to perform the method according to any one of claims 10 to 12.

**17.** A computer-readable storage medium, having instructions (or called a computer program, a program) stored therein, wherein when the instructions are invoked and executed on a computer, the computer is caused to perform the method according to any one of claims 1 to 9.

**18.** A computer-readable storage medium, having instructions (or called a computer program, a program) stored therein, wherein when the instructions are invoked and executed on a computer, the computer is caused to perform the method according to any one of claims 10 to 12.

Wireless communication
system 100

102

Downlink

101

Uplink

**FIG. 1**

| User equipment 101 | | Network device 102 |

S201, determine a maximum transmission power $P_{CMAX}$ for
a first channel of a sidelink according to a first power limit

S202, send the maximum transmission power $P_{CMAX}$

**FIG. 2**

| User equipment 101 | | Network device 102 |

S301, send indication information, where the
indication information is used to indicate a first
power limit when the UE camps on a serving cell

S302, receive the indication information

S303, determine a maximum transmission power $P_{CMAX}$ for a
first channel of a sidelink according to the first power limit

S304, send the maximum transmission power $P_{CMAX}$

**FIG. 3**

Determine a maximum transmission power $P_{CMAX}$ for a first channel
of a sidelink according to a first power limit, where the first power
limit is a permissible power limit when the user equipment camps on
a serving cell or is outside a coverage of the serving cell

S401

**FIG. 4**

Determine a maximum value or a minimum value among maximum permissible transmission powers for a plurality of sidelink resource pools according to configuration information of the plurality of sidelink resource pools pre-configured for the user equipment — S501

Determine a maximum transmission power $P_{CMAX}$ for a first channel of a sidelink according to a first power limit; where the first power limit is a permissible power limit when the user equipment camps on a serving cell or is outside a coverage of the serving cell — S502

**FIG. 5**

Send indication information to the user equipment, where the indication information is used to indicate a first power limit when the user equipment camps on a serving cell, and the first power limit is a maximum permissible power value for the serving cell — S601

**FIG. 6**

Send indication information to the user equipment, where the indication information is used to indicate a first power limit when the user equipment camps on a serving cell, and the first power limit is a maximum permissible power value for the serving cell — S701

Send configuration information of a plurality of sidelink resource pools to the user equipment — S702

**FIG. 7**

800

801

Processing module

**FIG. 8**

900

904

902

916

Memory

Processing
component

Communication
component

906

Power
supply
component

908

Processor

920

Multimedia
component

914

910

Sensor
component

Audio
component

Input/output interface

912

**FIG. 9**

1000

1001

Transceiver
module

**FIG. 10**

1100

1102 — Processor    Power supply component — 1106

1101 — Memory

Radio frequency component — 1104

Antenna — 1105

1103

**FIG. 11**

## INTERNATIONAL SEARCH REPORT

| | International application No. |
|---|---|
| | **PCT/CN2023/074307** |

### A. CLASSIFICATION OF SUBJECT MATTER

H04W52/30(2009.01)i; H04W52/50(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, DWPI, ENTXTC, VEN: D2D链路, V2X链路, 侧链路, 侧行链路, 发射功率, 服务, 服务基站, 服务小区, 副链路, 覆盖, 功率, 门限, 授权, 限值, 限制, 小区, 许可, 允许, 载波聚合, 之外, 直连链路, 驻留, 资源池, 最大, 阈值, base station, BS, cell, D2D, eNB, enodeb, maximum, minimum, power, sidelink, SL, threshold, V2X, maximum transmission power

### C. DOCUMENTS CONSIDERED TO BE RELEVANT

| Category* | Citation of document, with indication, where appropriate, of the relevant passages | Relevant to claim No. |
|---|---|---|
| X | CN 103329602 A (SAMSUNG ELECTRONICS CO., LTD.) 25 September 2013 (2013-09-25) description, paragraphs 36-152, and figures 1-10 | 10-11, 14, 16, 18 |
| Y | CN 103329602 A (SAMSUNG ELECTRONICS CO., LTD.) 25 September 2013 (2013-09-25) description, paragraphs 36-152, and figures 1-10 | 1-9, 12-13, 15-18 |
| Y | CN 105323839 A (YULONG COMPUTER TELECOMMUNICATION SCIENTIFIC (SHENZHEN) CO., LTD.) 10 February 2016 (2016-02-10) description, paragraphs 51-98, and figures 2-6 | 1-9, 12-13, 15-18 |
| A | CN 115088315 A (BEIJING XIAOMI MOBILE SOFTWARE CO., LTD.) 20 September 2022 (2022-09-20) entire document | 1-18 |
| A | US 2014233476 A1 (SAMSUNG ELECTRONICS CO., LTD.) 21 August 2014 (2014-08-21) entire document | 1-18 |
| A | HUAWEI et al. "Consideration on UE Maximum Transmission Power" *3GPP TSG-RAN WG4 Meeting 80. R4- 166364,* 26 August 2016 (2016-08-26), entire document | 1-18 |

☐ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 September 2023** | **10 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/074307**

| Patent document cited in search report | | | Publication date (day/month/year) | Patent family member(s) | | | Publication date (day/month/year) |
|---|---|---|---|---|---|---|---|
| CN | 103329602 | A | 25 September 2013 | KR | 20120081558 | A | 19 July 2012 |
| | | | | EP | 2664088 | A2 | 20 November 2013 |
| | | | | US | 2017280339 | A1 | 28 September 2017 |
| | | | | JP | 2014504114 | A | 13 February 2014 |
| | | | | KR | 20120081550 | A | 19 July 2012 |
| | | | | US | 2012176967 | A1 | 12 July 2012 |
| | | | | KR | 20120081573 | A | 19 July 2012 |
| | | | | JP | 2016136784 | A | 28 July 2016 |
| | | | | US | 2018049188 | A1 | 15 February 2018 |
| | | | | US | 2016242171 | A1 | 18 August 2016 |
| | | | | ES | 2805732 | T3 | 15 February 2021 |
| | | | | WO | 2012096485 | A2 | 19 July 2012 |
| | | | | WO | 2012096521 | A2 | 19 July 2012 |
| | | | | EP | 2664211 | A2 | 20 November 2013 |
| | | | | KR | 20190042525 | A | 24 April 2019 |
| | | | | US | 2016150423 | A1 | 26 May 2016 |
| | | | | JP | 2014506072 | A | 06 March 2014 |
| | | | | EP | 2664199 | A2 | 20 November 2013 |
| | | | | KR | 20120081549 | A | 19 July 2012 |
| | | | | EP | 3734869 | A1 | 04 November 2020 |
| | | | | JP | 2017153090 | A | 31 August 2017 |
| | | | | US | 2014307670 | A1 | 16 October 2014 |
| | | | | EP | 2665206 | A2 | 20 November 2013 |
| | | | | JP | 2014507844 | A | 27 March 2014 |
| | | | | US | 2013279343 | A1 | 24 October 2013 |
| | | | | IN | 201301939 | P2 | 28 March 2014 |
| CN | 105323839 | A | 10 February 2016 | None | | | |
| CN | 115088315 | A | 20 September 2022 | None | | | |
| US | 2014233476 | A1 | 21 August 2014 | WO | 2014126435 | A1 | 21 August 2014 |
| | | | | EP | 3399808 | A1 | 07 November 2018 |
| | | | | EP | 2768262 | A1 | 20 August 2014 |
| | | | | US | 2018041969 | A1 | 08 February 2018 |
| | | | | US | 2020077346 | A1 | 05 March 2020 |
| | | | | EP | 3883304 | A1 | 22 September 2021 |
| | | | | US | 2017041884 | A1 | 09 February 2017 |
| | | | | CN | 105027639 | A | 04 November 2015 |
| | | | | KR | 20140103055 | A | 25 August 2014 |
| | | | | JP | 2016513407 | W | 12 May 2016 |
| | | | | IN | 201502647 | P2 | 01 July 2016 |
| | | | | JP | 2019068486 | A | 25 April 2019 |
| | | | | CN | 110267340 | A | 20 September 2019 |
| | | | | IN | 202038009514 | A | 05 June 2020 |
| | | | | JP | 2021090218 | A | 10 June 2021 |

Form PCT/ISA/210 (patent family annex) (July 2022)